# EUROPÄISCHE PATENTSCHRIFT

(11) **EP 2 957 199 B1**
(45) Veröffentlichungstag und Bekanntmachung des Hinweises auf die Patenterteilung: **15.03.2017**
(21) Anmeldenummer: 15172252.7
(22) Anmeldetag: 16.06.2015
(51) Int. Cl.: A47J 31/40, A47J 31/42

(54) **AUTOMAT ZUR HERSTELLUNG EINES AUFGUSSGETRÄNKES**
MACHINE FOR THE PRODUCTION OF AN INFUSED BEVERAGE
MACHINE POUR LA PRODUCTION DE BOISSONS INFUSÉÉS

(30) Priorität: 17.06.2014 DE 102014108522
(43) Veröffentlichungstag der Anmeldung: 23.12.2015
(73) Patentinhaber: Miele & Cie. KG, 33332 Gütersloh (DE)
(72) Erfinder: Torenbeek, Martijn Reinder, 7384AR Wilp (NL); van der Kamp, Hedzer, 7205GJ Zutphen (NL)

(56) Entgegenhaltungen:
- EP-A1- 0 605 750
- EP-A1- 1 440 643
- EP-A1- 2 578 120
- EP-B1- 2 409 608
- WO-A2-2010/064912
- DE-U1-202007 008 815

## Beschreibung

Ein pflanzliches Produkt der hier betroffenen Art kann beispielsweise Kakao, Tee oder Kaffee sein, wobei diese pflanzlichen Produkte in unterschiedlichen Darreichungsformen angeboten werden. So besteht Tee überwiegend aus getrockneten und teilweise geschnittenen Blättern, während Kakao zumeist eine Pulverform aufweist, was überwiegend auch für Kaffee zutrifft. Darüber hinaus wird, um beim Beispiel des Kaffees zu bleiben, dieser auch in Bohnenform angeboten, so dass vor der Zubereitung eines Aufgussgetränkes die Kaffeebohnen zunächst gemahlen werden müssen. Zu jedem der genannten pflanzlichen Produkte gibt es jeweils unterschiedliche Sorten, wobei eine Sorte ganz allgemein ausgedrückt eine Variante einer Nutzpflanze darstellt, die sich durch einzelne Merkmale von anderen Sorten dieser Nutzpflanze unterscheidet. So gibt es zum Beispiel unterschiedliche Kaffeesorten, wie die Sorte "Arabica", "Robusta", Excelsa", "Liberica" und andere, die teilweise erhebliche geschmackliche Unterschiede aufweisen. Ferner wird insbesondere Kaffe in verschiedenen Varianten, also beispielsweise als schwarzer Kaffe, Espresso, als Milchkaffee oder Cappuchino zubereitet.
Zur Zubereitung eines Aufgussgetränkes aus den genannten pflanzlichen Produkten werden verstärkt Automaten eingesetzt, die in diesem Sinne multivalent einsetzbar sein müssen. Folglich ist es von Vorteil, wenn ein derartiger Automat die Herstellung eines Aufgussgetränkes aus verschiedenen pflanzlichen Produkten oder unterschiedlichen Sorten eines pflanzlichen Produktes gestattet. Um beim Beispiel des Kaffees zu bleiben, ist es wünschenswert, mit einem einzigen Automaten zum Beispiel einen koffeinhaltigen Kaffee, einen koffeinfreien Kaffee, einen Espresso oder ganz einfach Kaffeegetränke aus verschiedenen Kaffeesorten zubereiten zu können. Um einem derartigen Anspruch gerecht zu werden, weisen bekannte und bereits im Einsatz befindliche Automaten zur Herstellung eines Aufgussgetränkes bislang jedoch nur zwei, zur Aufnahme je einer Sorte eines pflanzlichen Produkts geeignete Kammern auf, die bodenseitig über jeweils eine Kammeröffnung verfügen. Diese Kammeröffnung dient dazu, das pflanzliche Produkt unter Nutzung der Schwerkraft in eine Brüheinheit zu überführen. Dabei kann zwischen der Kammer und der Brüheinheit ein Mahlwerk zum Zerkleinern von Bohnen vorgesehen sein.

Ein derartiger Automat zur Herstellung eines Aufgussgetränkes, der zwei, zur Aufnahme je einer Sorte eines pflanzlichen Produkts geeignete Kammern aufweist, die bodenseitig über jeweils wenigstens eine Kammeröffnung verfügen, durch die das pflanzliche Produkt unter Nutzung der Schwerkraft in eine Brüheinheit überführbar ist, geht am Beispiel eines Kaffeeautomaten aus der DE 10 2011 054 155 A1 hervor. Der in dieser Druckschrift offenbarte Kaffeeautomat verfügt über zwei voneinander getrennte Kammern, in denen unterschiedliche pflanzliche Produkte aufbewahrt werden können, bei denen es sich vorliegend um unterschiedliche Kaffeesorten handelt. Ein unterhalb der Kammeröffnungen angeordnetes, durch einen Elektromotor angetriebenes Verschlussmittel dient dazu, jeweils eine der Kammern anzuwählen. Nach der Anwahl einer der Kammern wird zunächst eine Dosierung eines vorbestimmten und/oder vorbestimmbaren Bohnenvolumens vorgenommen, wobei im Anschluss daran die zuvor angewählte Kammeröffnung mit Hilfe des Verschlussmittels verschlossen wird. Um die Stärke des zuzubereitenden Aufgussgetränkes zu erhöhen, kann nachfolgend über eine Zeitsteuerung eine zusätzliche Menge Kaffeebohnen aus der entsprechenden Kammer entnommen werden. Hierbei dient das Verschlussmittel erneut zur Auswahl der entsprechenden Kammer.
Darüber hinaus offenbart die Schrift eine Lösung zur Einstellung einer optimalen Kaffeestärke, die in einem Soll-Istwertvergleich des der Brüheinheit zugeführten Volumens beziehungsweise Gewichtes des Kaffees besteht. Zur Umsetzung der einzelnen Steuerungsprozesse beziehungsweise zur Durchführung des Soll-Istwertevergleiches dient hierbei eine Steuerungseinheit.
Als nachteilig hat sich hierbei jedoch herausgestellt, dass lediglich zwei Kammern zur Verfügung stehen, in denen jeweils unterschiedliche pflanzliche Produkte aufbewahrt werden können. Häufig besteht jedoch insbesondere bei Automaten zur Herstellung eines Aufgussgetränkes der Bedarf, eine Vielzahl unterschiedlicher pflanzlicher Produkte verarbeiten zu können.

Eine ähnliche, ebenfalls am Beispiel eines Kaffeeautomaten beschriebene Ausführung eines Automaten zur Herstellung eines Aufgussgetränkes geht auch aus der EP 2 578 121 A1 hervor. Diese Druckschrift offenbart einen Kaffeeautomaten, der ebenfalls maximal zwei Dosierkammern aufweist, die mit entsprechenden Kaffeebohnen befüllt werden können. Im Anschluss an die Befüllung der Dosierkammern werden die Bohnen an ein Mahlwerk übergeben und schließlich zur Zubereitung des Aufgussgetränkes, also des Kaffees, in eine Brüheinheit überführt.
Auch bei diesem Automaten besteht das Problem darin, dass hier lediglich zwei unterschiedliche Kaffeesorten verarbeitet werden können.

Die EP 0 605 750 B1 offenbart eine Kaffeemaschine mit einer Mehrzahl von Vorratskammern für Kaffeebohnen. Den bodenseitigen Öffnungen der Vorratskammern ist eine Auswahl- und Schließeinrichtung nachgeschaltet, die zum selektiven Öffnen einer ausgewählten Kammer dient. Dabei sind zwei übereinander angeordnete Lochscheiben vorgesehen, die gemeinsam mittels eines Antriebsmotors gedreht werden, um das zu öffnende Loch an die zugeordnete Kammer zu positionieren. Zum Öffnen der Kammer wird mittels eines als separaten Antrieb ausgebildeten Hubmagneten die zweite Lochscheibe relativ zur ersten Lochscheibe verdreht, bis die beiden Öffnungen in den Scheiben fluchten und so den Auslass aus dem zugeordneten Vorratsbehälter freigeben

Der Erfindung stellt sich somit das Problem, einen Automaten zur Herstellung eines Aufgussgetränkes bereitzustellen, der möglichst einfach aufgebaut sein sollte und die Verarbeitung von mehr als zwei Sorten pflanzlicher Produkte ermöglicht.

Erfindungsgemäß wird dieses Problem durch einen Automaten zur Herstellung eines Aufgussgetränkes mit den Merkmalen des Patentanspruchs 1 gelöst.
Vorteilhafte Ausgestaltungen und Weiterbildungen der Erfindung ergeben sich aus den jeweils nachfolgenden Unteransprüchen.

Ein Automat zur Herstellung eines Aufgussgetränkes, der mehrere, zur Aufnahme je einer Sorte eines pflanzlichen Produkts geeignete Kammern umfasst, die bodenseitig jeweils wenigstens eine Kammeröffnung aufweisen, durch die das pflanzliche Produkt unter Nutzung der Schwerkraft in eine Brüheinheit überführbar ist, wurde erfindungsgemäß dahingehend weitergebildet, dass der Automat mindestens drei Kammern aufweist und zwischen der Kammeröffnung einer durch ein Auswahlmittel anwählbaren Kammer und der Brüheinheit mindestens ein, um eine Rotationsachse drehbar gelagertes Verschlussmittel angeordnet ist, wobei das Auswahlmittel und das Verschlussmittel zumindest mittelbar durch ein einziges Antriebsmittel bewegbar ausgeführt sind.

Die mit der Erfindung erreichbaren Vorteile bestehen zunächst darin, dass ein zügiger Wechsel zwischen verschiedenen Sorten pflanzlicher Produkte, also beispielsweise zwischen verschiedenen Kaffeesorten, möglich ist. Der Automat ist zudem insgesamt sehr einfach aufgebaut und gestattet zudem die Zubereitung eines sortenreinen Aufgussgetränkes. Dies wird durch die spezielle Anordnung der Auswahlmittel und der Verschlussmittel in sinnfälliger Weise erreicht, da diese in einer logischen Abfolge zusammenwirken. Wenn im vorliegenden Fall von "mindestens" drei Kammern gesprochen wird, so ist darunter selbstverständlich auch eine Ausführung mit mehr als drei Kammern zu verstehen. Bleibt man beim Beispiel des Kaffeeautomaten, so kann mit einem erfindungsgemäßen Automaten wahlweise zum Beispiel ein herkömmlicher Filterkaffee, ein Espresso oder ein koffeinfreier Kaffee hergestellt werden. Eine besondere Vereinfachung des erfindungsgemäßen Automaten ergibt sich insbesondere auch daraus, dass lediglich ein einziges Antriebsmittel zum Einsatz kommt, um die Relativbewegungen zwischen Auswahlmittel und Verschlussmittel umzusetzen. Dabei kann das Antriebsmittel sowohl unmittelbar, als auch mittelbar mit dem Auswahlmittel und/oder dem Verschlussmittel gekoppelt sein.

Gemäß einer ersten Ausgestaltung der Erfindung wird davon ausgegangen, dass das Auswahlmittel und das Verschlussmittel um eine gemeinsame Rotationsachse drehbar gelagert sind. Eine derartige Ausführung gestattet eine sehr kompakte Bauweise dieser, für die Umsetzbarkeit der Erfindung wesentlichen Baugruppe.

Entsprechend einem weiterführenden Vorschlag wird eine Steuerungseinheit zur Ansteuerung des durch einen Elektromotor gebildeten Antriebsmittels zum Einsatz gebracht. Als Elektromotor kann dabei zum Beispiel ein Schrittmotor Verwendung finden. Die Steuerungseinheit ist erfindungsgemäß auch dazu geeignet, weitere oder sämtliche Steuerungsvorgänge des Automaten zu steuern. Hierbei handelt es sich in bevorzugter Weise um eine zentrale, elektronische Verarbeitungseinheit.

Eine sehr vorteilhafte Lösung geht darüber hinaus dahin, dass das Auswahlmittel eine Auswahlöffnung und das Verschlussmittel eine Durchlassöffnung aufweist und das Auswahlmittel sowie das Verschlussmittel als je ein Drehschieber ausgebildet sind. Die Ausbildung des Auswahlmittels beziehungsweise des Verschlussmittels als ein Drehschieber hat den Vorzug, dass diese um eine Rotationsachse drehbar ausgeführt sind. Werden sowohl das Auswahlmittel, als auch das Verschlussmittel jeweils als ein Drehschieber gestaltet, so können diese ferner unmittelbar übereinander angeordnet und in Relation zueinander um eine gemeinsame Rotationsachse verdreht werden. Dabei gelangt das pflanzliche Produkt nur dann in die Brüheinheit, wenn die ausgewählte Kammeröffnung, die Auswahlöffnung des Auswahlmittels und die Durchlassöffnung des Verschlussmittels miteinander fluchten. Jede andere Konstellation verhindert die Entnahme des pflanzlichen Produktes aus einer der Kammern. Aus dieser Lösung wird auch ersichtlich, dass es sich vorliegend um eine logische Verknüpfung der einzelnen Öffnungen handelt, die nur in einer definierten Konstellation die Abführung des pflanzlichen Produkts aus einer der Kammern ermöglicht.

Zur Erleichterung der Montage und um eine Platz sparende sowie kompakte Bauweise des Automaten zu erreichen, ist es von besonderem Vorteil, wenn das Verschlussmittel schalenförmig ausgebildet ist und das Auswahlmittel in das Verschlussmittel eingesetzt wird.

Weist darüber hinaus das Auswahlmittel oder das Verschlussmittel eine Getriebekontur auf, die bevorzugt am Außenumfang des Auswahlmittels oder des Verschlussmittels vorgesehen und die mit einem von dem Antriebsmittel angetriebenen Getriebemittel gekoppelt ist, so besteht insbesondere die Möglichkeit, eine verlustarme Kraftübertragung vom Antriebsmittel auf das Auswahlmittel oder das Verschlussmittel zu realisieren.

Eine konkrete Lösung dieses Vorschlages besteht darin, dass die Getriebekontur ein Zahnkranz und das Getriebemittel hierzu korrespondierend ein Zahnrad ist oder die Getriebekontur eine Reibfläche ist und das Getriebemittel hierzu korrespondierend ein Reibriemen ist. Insbesondere die Ausführungsvariante mit einem Zahnkranz und einem mit dem Zahnkranz in Eingriff stehenden Zahnrad hat den wesentlichen Vorzug, dass diese Elemente aus Kunststoff hergestellt werden können und damit fertigungstechnisch einfach zu produzieren sind, wobei sie in vorteilhafter Weise gleichermaßen ein nur sehr geringes Gewicht aufweisen.

Wird gemäß einem weiterführenden Vorschlag nach der Erfindung an dem Verschlussmittel ein Mitnehmer vorgesehen, der in eine korrespondierende und in dem Auswahlmittel ausgebildete Eingriffskontur eingreift, so lässt sich dadurch die Relativbewegung zwischen Auswahlmittel und Verschlussmittel auf einfache Weise lösen. Das Auswahlmittel wird dabei durch das an dem Verschlussmittel angreifende Antriebsmittel zusammen mit dem Verschlussmittel um die Rotationsachse bewegt, wobei auf diese Weise die Auswahlöffnung des Auswahlmittels unter die Kammeröffnung der ausgewählten Kammer verbracht wird. Bei der rückführenden Bewegung des Verschlussmittels verbleibt das Auswahlmittel in seiner zuvor eingenommene Position, bis die Durchlassöffnung des Verschlussmittels mit der Auswahlöffnung des Auswahlmittels und in der Folge auch mit der Kammeröffnung fluchten. Auf diese Weise kann das in der ausgewählten Kammer enthaltene pflanzliche Produkt abgeführt und in die Brüheinheit abgeführt werden.

Eine besonders einfache Lösungsvariante dieses Erfindungsgedankens besteht ferner darin, dass der Mitnehmer ein Stift und die Eingriffskontur ein bogenförmiges Langloch ist. Sofern das Verschlussmittel und das Auswahlmittel aus Kunststoff hergestellt sind, besteht die Möglichkeit, den Mitnehmer und die Eingriffskontur unmittelbar bei der Herstellung an dem Auswahlmittel beziehungsweise an dem Verschlussmittel vorzusehen beziehungsweise anzuformen, wodurch sich der Fertigungsaufwand erheblich reduziert.

Darüber hinaus ist es von Vorteil, wenn zur Bereitstellung der selbsttätigen Rückstellbewegung des Verschlussmittels oder des Auswahlmittels in eine Verschlussposition ein Federelement vorhanden ist, bei dem es sich entsprechend einer weiteren Ausgestaltung der Erfindung um eine Schenkelfeder handelt. Durch die selbstständige Rückstellbewegung kann erreicht werden, dass die Abführung des pflanzlichen Produkts aus der ausgewählten Kammer zeitlich begrenzt erfolgt und keine zusätzlichen Einrichtungen erforderlich sind, um das Verschlussmittel beziehungsweise das Auswahlmittel in eine zu Ihrer Öffnungsstellung entgegengesetzte Richtung zu bewegen. Die Verwendung eines Federelementes stellt folglich eine sehr einfache Lösung dar.

Wie zuvor bereits erläutert wurde, kann eine Variante der Erfindung darin bestehen, einen Mitnehmer in Form eines Stiftes vorzusehen, der in eine als Langloch ausgeführte Eingriffskontur eingreift, um dadurch eine Relativbewegung zwischen Auswahlmittel und Verschlussmittel zu erreichen, die darin besteht, dass das Auswahlmittel durch das an dem Verschlussmittel angreifende Antriebsmittel zusammen mit dem Verschlussmittel um die Rotationsachse bewegt wird, wobei auf diese Weise erreicht werden kann, dass die Auswahlöffnung des Auswahlmittels unter der Kammeröffnung der ausgewählten Kammer verbleibt. Bei der rückführenden Bewegung des Verschlussmittels verbleibt das Auswahlmittel in seiner zuvor eingenommene Position, bis die Durchlassöffnung des Verschlussmittels mit der Auswahlöffnung des Auswahlmittels und in der Folge auch mit der Kammeröffnung fluchten. Eine anschließende Bewegung des Verschlussmittels oder des Auswahlmittels bewirken wiederum den Verschluss der zuvor miteinander fluchtenden Öffnungen, so dass die Abführung des pflanzlichen Produktes aus der vorher ausgewählten Kammer unterbrochen wird. Diese Relativbewegung zwischen Auswahlmittel und Verschlussmittel kann gemäß einem weiterführenden Vorschlag nach der Erfindung auch dadurch erreicht werden, dass zwischen dem Auswahlmittel und der die Kammeröffnungen aufweisenden Unterseite eines die Kammern aufweisenden Behälters oder zwischen dem Auswahlmittel und dem Verschlussmittel eine Rastierungseinrichtung vorhanden ist.

Bei einer derartigen Rastierungseinrichtung kann es sich beispielsweise um eine Feder-Kugel-Raste oder eine elastisch verformbare Zunge mit einer daran ausgebildeten Nocken- oder Hakenkontur handeln, wobei die Feder-Kugelraste beziehungsweise die Nocken- oder Hakenkontur nur in definierten Positionen des Auswahlmittels in eine korrespondierende Ausnehmung einrückbar ist.

Da das Auswahlmittel und das Verschlussmittel in Relation zueinander zahllose Positionen einnehmen können, ist es insbesondere für die Steuerungseinheit von Vorteil, wenn die aktuelle Position des Auswahlmittels beziehungsweise des Verschlussmittels bestimmbar ist. Hierzu geht eine Ausgestaltung der Erfindung dahin, dass zur Umsetzung einer Lageerkennung des Auswahlmittels und/oder des Verschlussmittels am Außenumfang des Auswahlmittels und/oder des Verschlussmittels Signalgeber vorhanden sind, die mittels einer Detektoreinrichtung erfasst werden können.

Als Detektoreinrichtung kann dabei in vorteilhafter Weise eine mechanische Abtastvorrichtung Verwendung finden, die aus Erhebungen bestehende Signalgeber aufweist, die mit der Detektoreinrichtung abgetastet werden. Darüber hinaus ist ebenso ein elektronischer Signalaufnehmer zur Erfassung der von dem Signalgeber stammenden Signale verwendbar.

In an sich bekannter Weise kann darüber hinaus zwischen dem Verschlussmittel und der Brüheinheit ein Mahlwerk zum Zerkleinern des pflanzlichen Produkts vorhanden sein. Je nach Art des zu bearbeitenden pflanzlichen Produktes ist ein derartiges Mahlwerk geeignet, beispielsweise Kaffeebohnen oder Kakaobohnen zu mahlen. Wird in einem erfindungsgemäßen Automaten hingegen ein pulverförmiges pflanzliches Produkt in die Kammern eingebracht, so ist ein vorhandenes Mahlwerk auch in diesem Fall nicht hinderlich. Einerseits besteht die Möglichkeit, in diesem Fall das Mahlwerk durch einen geeigneten Förderschacht zu umgehen. Andererseits ist eine besonders einfache Ausführungsvariante darin zu sehen, dass das pulverförmige, pflanzliche Produkt nochmals in dem Mahlwerk verarbeitet wird, um anschließend in die Brüheinheit zu gelangen.

Es versteht sich, dass die Kammern in einem gemeinsamen Behälter zusammengefasst sein können, der beispielsweise aus Kunststoff hergestellt ist und als ein einteiliges Bauteil ausgeführt wird.

Darüber hinaus besteht die Möglichkeit, die erfindungsgemäße Lösung auch für einen Automaten mit nur zwei Kammern anzuwenden. Hierbei reicht ein Auswahlmittel aus, um dieses zwischen den Kammeröffnungen hin- und herzuschwenken. Darüber hinaus ist eine durch die Steuerungseinheit gesteuerte Zeitsteuerung einsetzbar, um die Stärke des zuzubereitenden Aufgussgetränkes zu definieren. Diese Zeitsteuerung kann auch durch eine Volumensteuerung ersetzt oder ergänzt werden.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung des Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Automaten zur Herstellung eines Aufgussgetränkes am Beispiel eines Kaffeeautomaten,
- Figur 2:: ausschnittsweise einen Blick in den Innenraum des Automaten, mit einer geöffneten Kammer,
- Figur 3:: ausschnittsweise einen Blick in den Innenraum des Automaten, mit geschlossenen Kammern,
- Figur 4:: ausschnittsweise einen Blick auf eine aus einem Auswahlmittel und einem Verschlussmittel bestehende Baueinheit bei geschlossener Kammeröffnung,
- Figur 5:: ausschnittsweise einen Blick auf eine aus einem Auswahlmittel und einem Verschlussmittel bestehende Baueinheit bei geöffneter Kammeröffnung,
- Figur 6:: den Schnittverlauf VI-VI aus Figur 4,
- Figur 7:: ausschnittsweise einen Blick auf eine aus einem Auswahlmittel und einem Verschlussmittel bestehende Baueinheit mit einem Federelement,
- Figur 8:: eine stark vereinfachte Darstellung eines ersten Teils einer Rastiereinrichtung,
- Figur 9:: eine stark vereinfachte Darstellung eines mit dem ersten Teil einer Rastiereinrichtung korrespondierenden zweiten Teil der Rastiereinrichtung,
- Figur 10:: einen Blick auf eine Lageerkennungseinrichtung
und
- Figur 11:: ein Verschlussmittel als isoliertes Einzelteil mit mehreren, an seinem Außenumfang angeordneten Signalgebern.

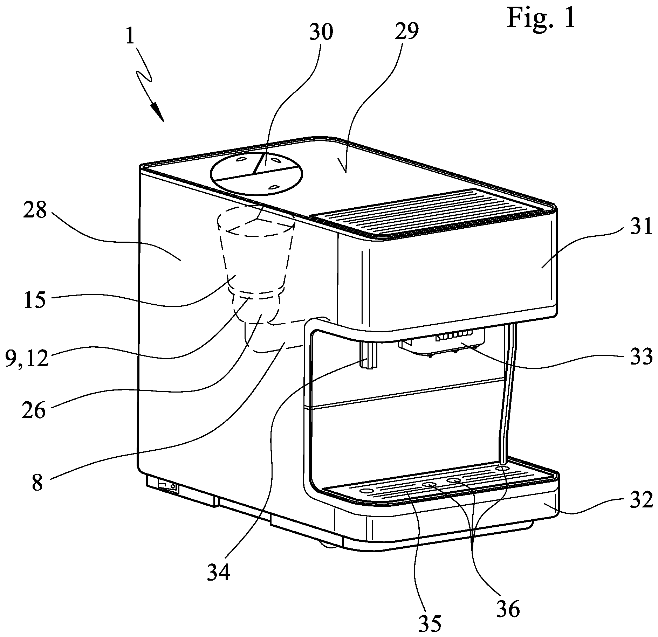

Aus der Darstellung in Figur 1 geht in räumlicher Ansicht ein Automat 1 zur Herstellung eines Aufgussgetränkes hervor, bei dem es sich vorliegend um einen Kaffeeautomaten als transportables Einzelgerät handelt, in dessen Gehäuse 28 neben anderen Aggregaten und Einrichtungen auch ein Behälter 15 vorhanden ist, der in der Figur 1 durch gestrichelte Linien nur andeutungsweise dargestellt wurde. Der Behälter 15 umfasst vorliegend insgesamt drei Kammern zur Aufnahme unterschiedlicher pflanzlicher Produkte, wobei es sich im vorliegenden Fall um verschiedene Kaffeesorten handelt. Unterhalb des Behälters 15 befinden sich ein Auswahlmittel 9 und ein Verschlussmittel 12, durch die eine Kaffeesorte einer Kammer angewählt werden kann. Um aus der in Bohnenform vorliegenden Kaffeesorte ein Aufgussgetränk, also einen Kaffee, zubereiten zu können, ist unterhalb des Verschlussmittels 12 ein Mahlwerk 26 vorhanden. Die in dem Mahlwerk 26 zu einem Pulver verarbeiteten Kaffeebohnen gelangen im Anschluss daran an eine Brüheinheit 8.
Das Gehäuse 28 des Kaffeeautomaten 1 in Figur 1 weist an seiner Oberseite 29 einen Deckel 30 auf, der der Anzahl der Kammern entsprechend, dreigeteilt ist und durch den frische Kaffeebohnen in die Kammern gefüllt werden können. Im frontseitigen Bereich weist der in Figur 1 dargestellte Kaffeeautomat 1 einen oberen Vorbau 31 und einen tiefer liegenden, unteren Vorbau 32 auf. In dem oberen Vorbau 31 sind weitgehend sichtgeschützt eine Dampfdüse 34 zur Abgabe heißen Wasserdampfes und mehrere Ausgabeeinrichtungen 33 zur Abgabe des zubereiteten Kaffees beziehungsweise zur Zuführung heißer Milch in ein nicht gezeigtes Trinkgefäß angeordnet.
Der untere Vorbau 32 dient hingegen dazu, ein Trinkgefäß, also beispielsweise eine Tasse, unter den Ausgabeeinrichtungen 33 beziehungsweise unter der Dampfdüse 34 abzustellen. Zur Abführung übergelaufener oder verspritzter Flüssigkeitsreste in einen Auffangbehälter weist der untere Vorbau 32 ferner ein Abtropfblech 35 auf, dass mit mehreren Ablauföffnungen 36 ausgestattet ist. Der Auffangbehälter befindet sich folglich unterhalb des Abtropfbleches 35.

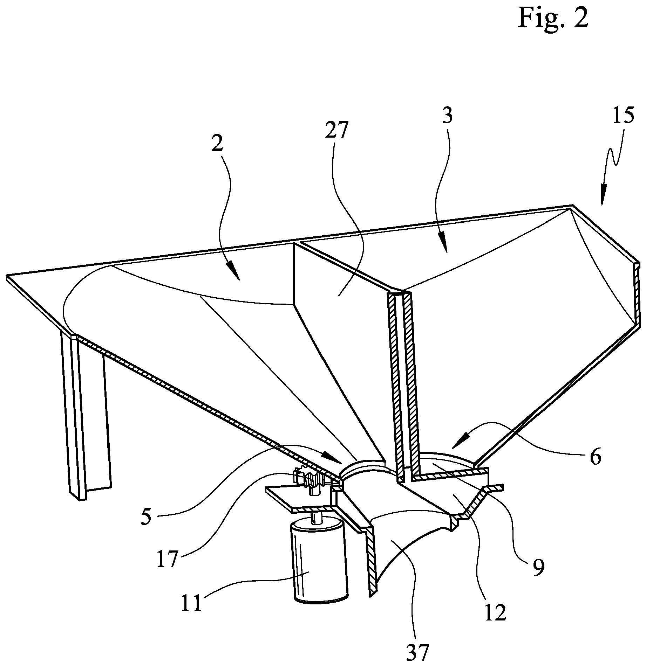

Ausgehend von dem im Zusammenhang mit der Figur 1 allgemein beschriebenen Automaten 1 zur Zubereitung von Kaffee erlaubt die Figur 2 ausschnittsweise einen Blick in den Innenraum eines derartigen Automaten 1. Die Darstellung in der Figur 2 zeigt einen Behälter 15 im Schnitt, so dass vorliegend nur zwei durch eine Trennwand 27 voneinander getrennte Kammern 2, 3 erkennbar sind, die in der Darstellung ebenfalls geschnitten gezeigt sind. Die Kammeröffnung 6 der Kammer 3 ist in diesem Fall verschlossen, was bedeutet, dass sich das Auswahlmittel 9 und das Verschlussmittel 12 jeweils in einer Position befinden, in der die Auswahlöffnung 13 und die Durchlassöffnung 14 nicht unterhalb der Kammer 3 angeordnet sind.
Vielmehr fluchtet bei dem dargestellten Beispiel die Auswahlöffnung 13 mit der Kammeröffnung 5 der Kammer 2. Darüber hinaus geht aus der Figur 2 deutlich erkennbar hervor, dass auch die Durchlassöffnung 14 des Verschlussmittels 12 mit der Kammeröffnung 5 und der Auswahlöffnung 13 fluchtet, so dass die Kammer 2 in diesem Fall geöffnet ist. Bei einer derartigen Konstellation kann ein pflanzliches Produkt aus der Kammer 2 über den unterhalb des Verschlussmittels 12 vorhandenen Förderschacht 37 in die nachgeordnete Brüheinheit 8 beziehungsweise in ein nachfolgendes Mahlwerk 26 überführt werden. Bei dem Antriebsmittel 11 handelt es sich vorliegend um einen Elektromotor, der auf seiner Welle über ein Getriebemittel 17 verfügt, bei dem es sich vorliegend um ein Zahnrad handelt. Dieses Getriebemittel 17 steht in unmittelbarem Eingriff mit einer an dem Außenumfang des Verschlussmittels 12 ausgebildeten Getriebekontur 16, die korrespondierend zu dem Zahnrad ein Zahnkranz ist.

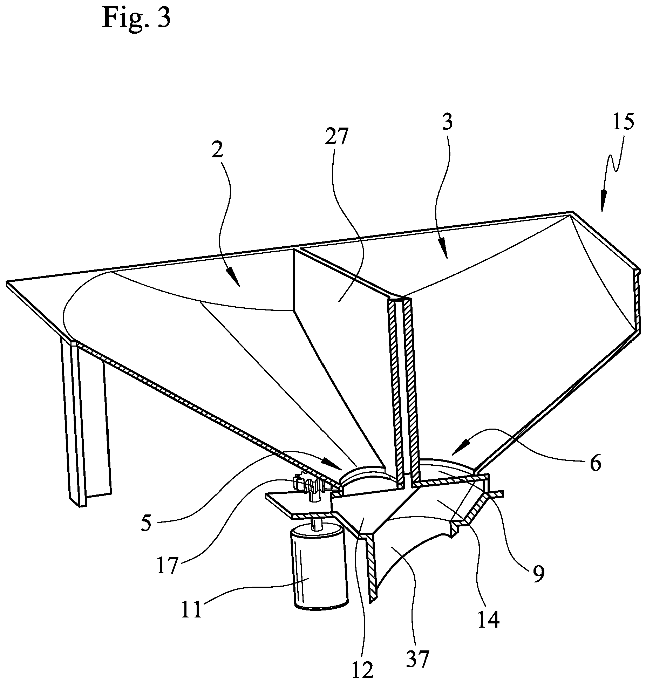

Der Unterschied zwischen der Figur 2 und der Figur 3 besteht darin, dass in der Figur 3 sowohl die Kammer 2, als auch die Kammer 3 geschlossen sind. In diesem Fall wurde eine Rückstellbewegung des Verschlussmittels 12 mit Hilfe des Antriebsmittels 11 bewirkt, so dass das Verschlussmittel 12 um etwa 180° um die gemeinsame Rotationsachse 10 gedreht wurde, so dass sich die Durchlassöffnung 14 des Verschlussmittels 12 hierbei unterhalb der Kammeröffnung 6 befindet. Da das Auswahlmittel 9 hier jedoch so positioniert ist, dass sich dessen Auswahlöffnung 13 unterhalb der durch das Verschlussmittel 12 verschlossene Kammeröffnung 5 befindet, ist auch die Kammer 2 verschlossen.

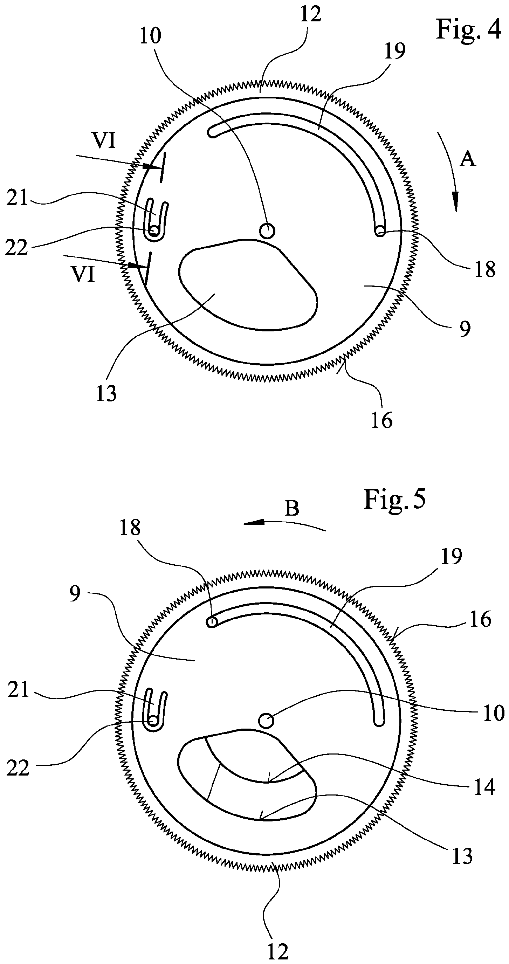

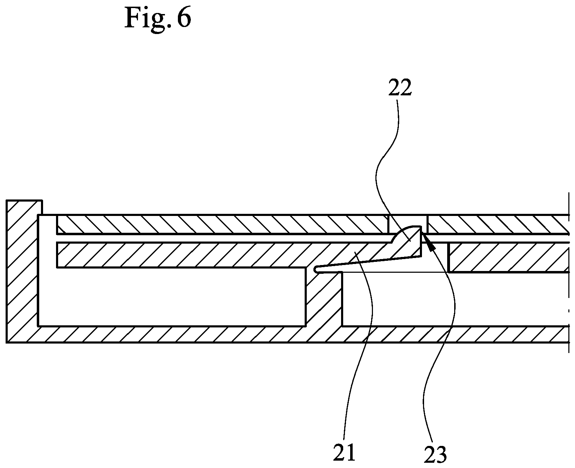

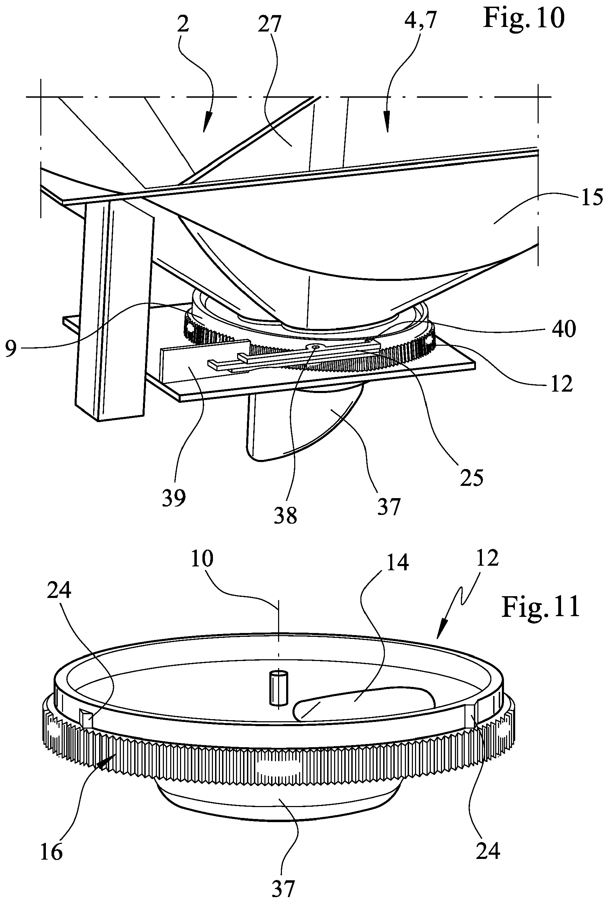

Anhand der Darstellungen in den Figuren 4-6 wird ein Prinzip der Relativbewegung zwischen dem Auswahlmittel 9 und dem Verschlussmittel 12 deutlich. Das Verschlussmittel 12 ist hierbei schalenförmig ausgebildet und entspricht folglich dem in der Figur 11 dargestellten Verschlussmittel 12, dass in der Lage ist, das Auswahlmittel 9 aufzunehmen. Darüber hinaus verfügt das Verschlussmittel 12 an seinem Außenumfang über eine als Zahnkranz gestaltete Getriebekontur 16, in die ein in den Figuren 4-6 nicht dargestelltes Getriebemittel 17 des Antriebsmittels 11 eingreift, so dass dadurch eine Bewegungsübertragung von dem Antriebsmittel 11 auf das Verschlussmittel 12 möglich ist. An dem Verschlussmittel 12 ist ferner ein Mitnehmer 18 ausgebildet, der in eine korrespondierende und in dem Auswahlmittel 9 ausgebildete, die Form eines Langloches aufweisende Eingriffskontur 19 eingreift. Die für die Umsetzbarkeit der Erfindung erforderliche Relativbewegung zwischen Auswahlmittel 9 und Verschlussmittel 12 erfolgt dabei derart, dass der Mitnehmer 18 sich zunächst in einer Endposition der Eingriffskontur 19 des Auswahlmittels 9 befindet. Aus dieser Position heraus kann das Verschlussmittel 12 zusammen mit dem Auswahlmittel 9 in Richtung des Pfeils "A", also um die Rotationsachse 10, bewegt werden, wobei auf diese Weise die Auswahlöffnung 13 des Auswahlmittels 9 unter die Kammeröffnung der ausgewählten Kammer verbracht wird. In der in Figur 4 dargestellten Ausgangsposition ist die Auswahlöffnung 13 des Auswahlmittels 9 jedoch noch durch das darunter angeordnete Verschlussmittel 12 verschlossen, so dass in dieser Position keine Entnahme eines pflanzlichen Produktes aus der darüber vorhandenen Kammer erfolgen kann. In einem Folgeschritt wird nunmehr das Verschlussmittel 12 in entgegengesetzter Richtung um die Rotationsachse 10 gedreht, so dass der Mitnehmer 18 innerhalb der Eingriffskontur 19 in Richtung des Pfeils "B" in Figur 5 gleitet. Bei dieser rückführenden Bewegung des Verschlussmittels 12 verbleibt das Auswahlmittel 9 in seiner zuvor eingenommene Position, bis die Durchlassöffnung 14 des Verschlussmittels 12 mit der Auswahlöffnung 13 des Auswahlmittels 9 und in der Folge auch mit der darüber liegenden Kammeröffnung fluchten. Auf diese Weise kann nunmehr das in der ausgewählten Kammer enthaltene pflanzliche Produkt abgeführt werden.
Eine besondere Bedeutung hat in diesem Zusammenhang auch die in der Figur 6 im Schnitt dargestellte Rastiereinrichtung, die dem Schnittverlauf VI-VI aus Figur 4 entspricht und die vorliegend aus einer Zunge 21 mit einer daran ausgebildeten Hakenkontur 22 besteht. Die Hakenkontur 22 greift dabei in vorgegebenen Positionen in eine korrespondierende Ausnehmung 23 ein, die an der Unterseite des die Kammern aufweisenden Behälters 15 eingebracht ist. Wie aus der Schnittdarstellung in Figur 6 deutlich erkennbar wird, gestattet die Hakenkontur 22 ausschließlich eine Drehbewegung in einer Richtung. In der entgegengesetzten Richtung kommt die Hakenkontur mit einer Stirnfläche unmittelbar in der Ausnehmung 23 zur Anlage, so dass eine Drehbewegung in dieser Richtung verhindert werden kann.

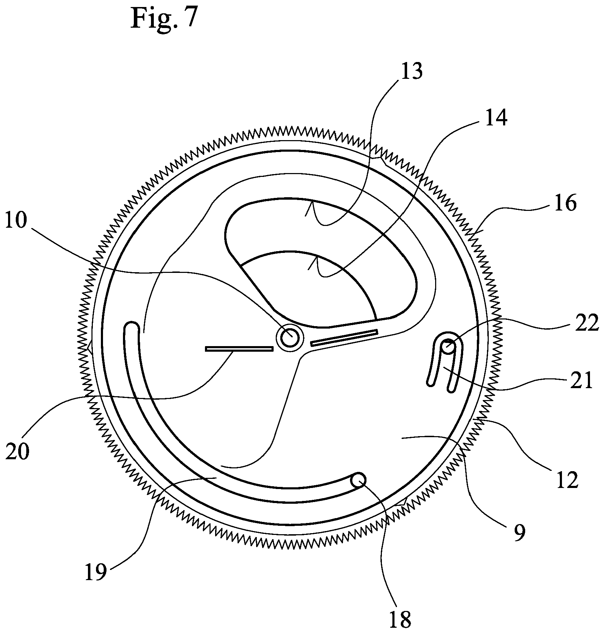

In der Figur 7 ist eine Ausgestaltungsvariante gezeigt, die als Besonderheit ein Federelement 20 aufweist, welches vorliegend als Schenkelfeder ausgeführt und um die Rotationsachse 10 herum angeordnet ist. Das Federelement 20 dient dabei dazu, eine Rückstellbewegung des Verschlussmittels 12 in Relation zu dem Auswahlmittel 9 zu gewährleisten. Folglich muss hierbei nicht das Antriebsmittel 11 zum Einsatz kommen, um die genannte Rückstellbewegung zu realisieren. In der in Figur 7 gezeigten Stellung fluchten die Auswahlöffnung 13 des Auswahlmittels 9 und die Durchlassöffnung 14 des Verschlussmittels 12 mit der darüber angeordneten Kammeröffnung, so dass in dieser Position ein pflanzliches Produkt aus der ausgewählten Kammer entnommen werden könnte.

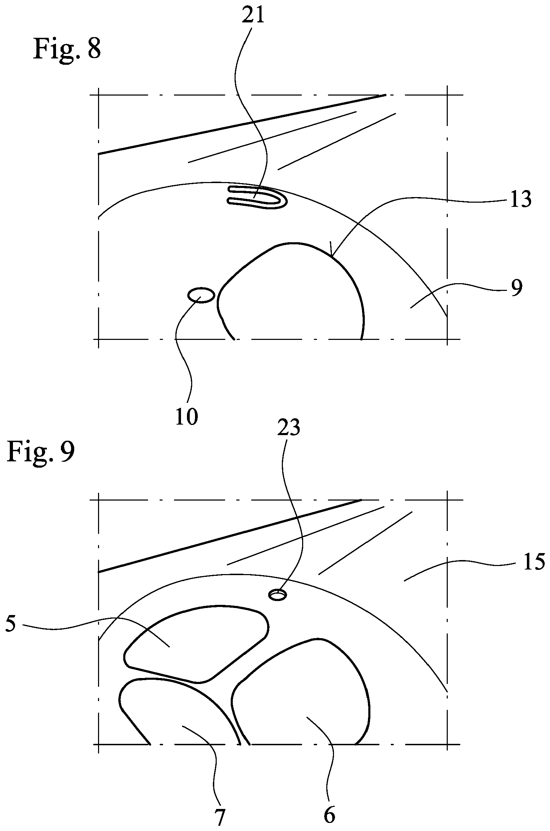

Die Figuren 8 und 9 zeigen noch einmal die bereits beschriebene Rastiereinrichtung, die, wie dies insbesondere aus der Darstellung in Figur 9 hervorgeht, aus einer Ausnehmung 23 an der Unterseite des die Kammern 2, 3, 4 aufweisenden Behälters 15 besteht, in die die Hakenkontur 22 der an dem Auswahlmittel 9 ausgebildeten, elastisch verformbaren Zunge 21 eingreift. Dieser Eingriff erfolgt nur in vordefinierten Positionen, also jeweils dort, wo an der Unterseite des Behälters 15 eine Ausnehmung 23 vorhanden ist.

Da die Prozesse innerhalb des erfindungsgemäßen Automaten 1 durch eine Steuerungseinheit gesteuert ablaufen, ist es hilfreich, wenn eine Positionserkennung der Stellung zwischen Auswahlmittel 9 und Verschlussmittel 12 gegeben ist. Hierzu zeigen die Figuren 10 und 11 eine Möglichkeit, wie eine derartige Positionserkennung umgesetzt werden kann. Im vorliegenden Fall wurde für die Positionserkennung eine mechanische Abtastvorrichtung vorgesehen, die, wie dies die Figur 10 zeigt, aus einer Detektoreinrichtung 25 besteht, bei der es sich um einen um eine Achse 38 drehbar gelagerten Hebelarm handelt, dessen dem Verschlussmittel 12 zugewandtes Ende ein Abtastmittel 40 in Form eines Nockens aufweist. Dieser Nocken 40 geleitet an einer korrespondierenden Oberfläche des Verschlussmittels 12 entlang, wenn dieses um die Rotationsachse 10 gedreht wird. An definierten Positionen weist das schalenförmige Verschlussmittel 12 Signalgeber 24 in Form aus der Oberfläche des Verschlussmittels 12 herausgebildeter Erhebungen auf, die zu einem Auslenken der Detektoreinrichtung 25 führen, wenn das Verschlussmittel 12 mit dem Abtastmittel 40 in Kontakt kommt. Diese Signalgerber 24 gehen deutlich erkennbar aus der Darstellung in Figur 11 hervor. Die Auslenkung der Detektoreinrichtung 25 um die Achse 38 bewirkt die Auslösung eines Signals an einem Kontaktelement 39, welches sich an dem dem Abtastmittel 40 gegenüberliegenden Ende der Detektoreinrichtung 25 befindet. Ein auf diese Weise erzeugtes Signal kann innerhalb der Steuerungseinheit verarbeitet werden und gestattet damit die Erfassung der genauen Position des Verschlussmittels 12 in Relation zum Auswahlmittel 9 beziehungsweise zu den Kammeröffnungen 5, 6, 7.

### BEZUGSZEICHENLISTE:

- 1: Automat
- 2: Kammer
- 3: Kammer
- 4: Kammer
- 5: Kammeröffnung
- 6: Kammeröffnung
- 7: Kammeröffnung
- 8: Brüheinheit
- 9: Auswahlmittel
- 10: Rotationsachse
- 11: Antriebsmittel
- 12: Verschlussmittel
- 13: Auswahlöffnung
- 14: Durchlassöffnung
- 15: Behälter
- 16: Getriebekontur
- 17: Getriebemittel
- 18: Mitnehmer
- 19: Eingriffskontur
- 20: Federelement
- 21: Zunge
- 22: Hakenkontur
- 23: Ausnehmung
- 24: Signalgeber
- 25: Detektoreinrichtung
- 26: Mahlwerk
- 27: Trennwand
- 28: Gehäuse
- 29: Oberseite
- 30: Deckel
- 31: oberer Vorbau
- 32: unterer Vorbau
- 33: Ausgabeeinrichtung
- 34: Dampfdüse

### FORTSETZUNG BEZUGSZEICHENLISTE:

- 35: Abtropfblech
- 36: Ablauföffnungen
- 37: Förderschacht
- 38: Achse
- 39: Kontaktelement
- 40: Abtastmittel

## Patentansprüche

1. Automat (1) zur Herstellung eines Aufgussgetränkes, umfassend mehrere, zur Aufnahme je einer Sorte eines pflanzlichen Produkts geeignete Kammern (2, 3, 4), die bodenseitig jeweils wenigstens eine Kammeröffnung (5, 6, 7) aufweisen, durch die das pflanzliche Produkt unter Nutzung der Schwerkraft in eine Brüheinheit (8) überführbar ist, wobei der Automat mindestens drei Kammern (2, 3, 4) aufweist und zwischen der Kammeröffnung (5, 6, 7) einer durch ein Auswahlmittel (9) anwählbaren Kammer (2, 3, 4) und der Brüheinheit (8) mindestens ein, um eine Rotationsachse (10) drehbar gelagertes Verschlussmittel (12) angeordnet ist,
**dadurch gekennzeichnet,**
**dass** das Auswahlmittel (9) und das Verschlussmittel (12) zumindest mittelbar durch ein einziges Antriebsmittel (11) bewegbar ausgeführt sind.

2. Automat nach Anspruch 1,
**dadurch gekennzeichnet, dass**
das Auswahlmittel (9) und das Verschlussmittel (12) um eine gemeinsame Rotationsachse (10) drehbar gelagert sind.

3. Automat nach einem der vorstehend genannten Ansprüche,
**dadurch gekennzeichnet, dass**
eine Steuerungseinheit zur Ansteuerung des durch einen Elektromotor gebildeten Antriebsmittels (11) vorhanden ist.

4. Automat nach einem der vorstehend genannten Ansprüche,
**dadurch gekennzeichnet, dass**
das Auswahlmittel (9) eine Auswahlöffnung (13) und das Verschlussmittel (12) eine Durchlassöffnung (14) aufweist und das Auswahlmittel (9) sowie das Verschlussmittel (12) als je ein Drehschieber ausgebildet sind.

5. Automat nach einem der vorstehend genannten Ansprüche,
**dadurch gekennzeichnet, dass**
das Verschlussmittel (12) schalenförmig ausgebildet ist und das Auswahlmittel (9) in das Verschlussmittel (12) eingesetzt ist.

6. Automat nach einem der vorstehend genannten Ansprüche,
**dadurch gekennzeichnet, dass**
das Auswahlmittel (9) oder das Verschlussmittel (12) an seinem Außenumfang eine Getriebekontur (16) aufweist, die mit einem von dem Antriebsmittel (11) angetriebenen Getriebemittel (17) gekoppelt ist.

7. Automat nach Anspruch 6,
**dadurch gekennzeichnet, dass**
die Getriebekontur (16) ein Zahnkranz und das Getriebemittel (17) hierzu korrespondierend ein Zahnrad ist oder die Getriebekontur (15, 16) eine Reibfläche ist und das Getriebemittel (17) hierzu korrespondierend ein Reibriemen ist.

8. Automat nach einem der vorstehend genannten Ansprüche,
**dadurch gekennzeichnet, dass**
an dem Verschlussmittel (12) ein Mitnehmer (18) vorhanden ist, der in eine korrespondierende und in dem Auswahlmittel (9) ausgebildete Eingriffskontur (19) eingesetzt ist.

9. Automat nach Anspruch 8,
**dadurch gekennzeichnet, dass**
der Mitnehmer (18) ein Stift und die Eingriffskontur (19) ein bogenförmiges Langloch ist.

10. Automat nach Anspruch 8 oder 9,
**dadurch gekennzeichnet, dass**
zur Bereitstellung einer selbsttätigen Rückstellbewegung des Auswahlmittels (9) oder des Verschlussmittels (12) in eine Verschlussposition ein Federelement (20) vorhanden ist.

11. Automat nach Anspruch 10,
**dadurch gekennzeichnet, dass**
das Federelement (20) eine Schenkelfeder ist.

12. Automat nach einem der vorstehend genannten Ansprüche,
**dadurch gekennzeichnet, dass**
zwischen dem Auswahlmittel (9) und der die Kammeröffnungen (5, 6, 7) enthaltenden Unterseite eines die Kammern (2, 3, 4) aufweisenden Behälters (15) oder zwischen dem Auswahlmittel (9) und dem Verschlussmittel (12) eine Rastierungseinrichtung vorhanden ist.

13. Automat nach Anspruch 12,
**dadurch gekennzeichnet, dass**
die Rastierungseinrichtung eine Feder-Kugel-Raste oder eine elastisch verformbare Zunge (21) mit einer daran ausgebildeten Nocken- oder Hakenkontur (22) aufweist, die nur in definierten Positionen des Auswahlmittels (9) in eine korrespondierende Ausnehmung (23) einrückbar ist.

14. Automat nach einem der vorstehend genannten Ansprüche,
**dadurch gekennzeichnet, dass**
zur Umsetzung einer Lageerkennung des Auswahlmittels (9) und/oder des Verschlussmittels (12) am Außenumfang des Auswahlmittels (9) und/oder des Verschlussmittels (12) Signalgeber (24) vorhanden sind, die mittels einer Detektoreinrichtung (25) bestimmbar sind.

15. Automat nach Anspruch 14,
**dadurch gekennzeichnet, dass**
die Detektoreinrichtung (25) eine mechanische Abtastvorrichtung der aus Erhebungen bestehenden Signalgeber (24) oder ein elektronischer Signalaufnehmer zur Erfassung der von dem Signalgeber (24) stammenden Signale ist.

16. Automat nach einem der vorstehend genannten Ansprüche,
**dadurch gekennzeichnet, dass**
zwischen dem Verschlussmittel (12) und der Brüheinheit (8) ein Mahlwerk (26) zum Zerkleinern des pflanzlichen Produkts angeordnet ist.

17. Automat nach einem der vorstehend genannten Ansprüche,
**dadurch gekennzeichnet, dass**
die Kammern (5, 6, 7) Bestandteile eines diese aufweisenden Behälters (27) sind.

## Claims

1. Automatic machine (1) for producing an infusion beverage, comprising a plurality of chambers (2, 3, 4) that are suitable for receiving one sort of a plant product each and that each comprise at least one chamber opening (5, 6, 7) on the floor side through which the plant product can be transferred into a brewing unit (8) using the force of gravity, the automatic machine comprising at least three chambers (2, 3, 4), and at least one closure means (12) that is mounted so as to be rotatable about an axis of rotation (10) being arranged between the chamber opening (5, 6, 7) of a chamber (2, 3, 4) that can be selected by a selection means (9) and the brewing unit (8),
**characterised in that**
the selection means (9) and the closure means (12) are designed to be movable at least indirectly by a single drive means (11).

2. Automatic machine according to claim 1,
**characterised in that**
the selection means (9) and the closure means (12) are mounted so as to be rotatable about a common axis of rotation (10).

3. Automatic machine according to either of the preceding claims,
**characterised in that**
a control unit is provided for controlling the drive means (11) formed by an electric motor.

4. Automatic machine according to any of the preceding claims,
**characterised in that**
the selection means (9) comprises a selection opening (13) and the closure means comprises a through-opening (14), and the selection means (9) and the closure means (12) are each designed as a rotary vane.

5. Automatic machine according to any of the preceding claims,
**characterised in that**
the closure means (12) is shell-shaped and the selection means (9) is inserted into the closure means (12).

6. Automatic machine according to any of the preceding claims,
**characterised in that**
the selection means (9) or the closure means (12) has a gear contour (16) on the outer periphery thereof, which gear contour is coupled to a gear means (17) driven by the drive means (11).

7. Automatic machine according to claim 6,
**characterised in that**
the gear contour (16) is a gear rim and the gear means (17) is a corresponding gear wheel, or the gear contour (15, 16) is a friction surface and the gear means (17) is a corresponding friction belt.

8. Automatic machine according to any of the preceding claims,
**characterised in that**
an entraining element (18) is provided on the closure means (12), which entraining element is inserted into a corresponding engagement contour (19) formed in the selection means (9).

9. Automatic machine according to claim 8,
**characterised in that**
the entraining element (18) is a pin and the engagement contour (19) is a curved slot.

10. Automatic machine according to either claim 8 or claim 9,
**characterised in that**
a spring element (20) is provided for providing an automatic restoring movement of the selection means (9) or the closure means (12) into a closed position.

11. Automatic machine according to claim 10,
**characterised in that**
the spring element (20) is a leg spring.

12. Automatic machine according to any of the preceding claims,
**characterised in that**
a locking device is provided between the selection means (9) and the underside, comprising the chamber openings (5, 6, 7), of a container (15) comprising the chambers (2, 3, 4), or between the selection means (9) and the closure means (12).

13. Automatic machine according to claim 12,
**characterised in that**
the locking device comprises a spring-ball catch or an elastically deformable tongue (21) having a cam or hook contour (22) formed thereon which can engage in a corresponding recess (23) only in defined positions of the selection means (9).

14. Automatic machine according to any of the preceding claims,
**characterised in that**
signal transmitters (24), which can be determined by a detection device (25), are provided on the outer periphery of the selection means (9) and/or of the closure means (12) in order to identify the position of the selection means (9) and/or of the closure means (12).

15. Automatic machine according to claim 14,
**characterised in that**
the detection device (25) is a mechanical scanner of the signal transmitters (24) consisting of raised portions, or an electronic signal receiver for detecting the signals originating from the signal transmitter (24).

16. Automatic machine according to any of the preceding claims,
**characterised in that**
a grinder (26) is arranged between the closure means (12) and the brewing unit (8) for grinding the plant product.

17. Automatic machine according to any of the preceding claims,
**characterised in that**
the chambers (5, 6, 7) are components of a container (27) comprising said chambers.

## Revendications

1. Machine automatique (1) destinée à la réalisation d'une boisson infusée, comprenant plusieurs chambres (2, 3, 4), appropriées pour recevoir chacune une sorte d'un produit végétal, qui présentent côté fond respectivement au moins une ouverture de chambre (5, 6, 7) à travers laquelle le produit végétal peut, en utilisant la force de gravité, être transféré dans une unité d'infusion (8), et la machine présente au moins trois chambres (2, 3, 4), et au moins un moyen de fermeture (12), supporté en rotation autour d'un axe de rotation (10), est disposé entre l'ouverture de chambre (5, 6, 7) d'une chambre (2, 3, 4) pouvant être choisie par un moyen de sélection (9) et l'unité d'infusion (8),
**caractérisée en ce que**
le moyen de sélection (9) et le moyen de fermeture (12) sont réalisés de façon à pouvoir être déplacés au moins indirectement par un moyen d'entraînement (11) unique.

2. Machine automatique selon la revendication 1,
**caractérisée en ce que**
le moyen de sélection (9) et le moyen de fermeture (12) sont supportés en rotation autour d'un axe de rotation (10) commun.

3. Machine automatique selon l'une des revendications précédentes,
**caractérisée**
**par** la présence d'une unité de commande pour la commande du moyen d'entraînement (11) formé par un moteur électrique.

4. Machine automatique selon l'une des revendications précédentes,
**caractérisée en ce que**
le moyen de sélection (9) présente une ouverture de sélection (13), et le moyen de fermeture (12) présente une ouverture de passage (14), et le moyen de sélection (9) ainsi que le moyen de fermeture sont constitués en tant que respectivement un tiroir rotatif.

5. Machine automatique selon l'une des revendications précédentes,
**caractérisée en ce que**
le moyen de fermeture (12) est constitué en forme de coquille, et le moyen de sélection (9) est introduit dans le moyen de fermeture (12).

6. Machine automatique selon l'une des revendications précédentes,
**caractérisée en ce que**
le moyen de sélection (9) ou le moyen de fermeture (12) présente sur sa circonférence extérieure un contour d'engrenage (16) qui est couplé à un moyen d'engrenage (17) entraîné par le moyen d'entraînement (11).

7. Machine automatique selon la revendication 6,
**caractérisée en ce que**
le contour d'engrenage (16) est une couronne dentée, et le moyen d'engrenage (17) est une roue dentée qui lui correspond, ou le contour d'engrenage (15, 16) est une surface de friction et le moyen d'engrenage (17) est une courroie de friction qui lui correspond.

8. Machine automatique selon l'une des revendications précédentes,
**caractérisée**
**par** la présence, sur le moyen de fermeture (12), d'un entraîneur (18) qui est introduit dans un contour d'engagement (19) correspondant et constitué dans le moyen de sélection (9).

9. Machine automatique selon la revendication 8,
**caractérisée en ce que**
l'entraîneur (18) est une broche, et le contour d'engagement (19) est un trou oblong en forme d'arc.

10. Machine automatique selon la revendication 8 ou 9,
**caractérisée**
**par** la présence d'un élément de ressort (20) pour la fourniture d'un mouvement de rappel automatique du moyen de sélection (9) ou du moyen de fermeture (12) vers une position de fermeture.

11. Machine automatique selon la revendication 10,
**caractérisée en ce que**
l'élément de ressort (20) est un ressort à branches.

12. Machine automatique selon l'une des revendications précédentes,
**caractérisée**
**par** la présence d'un système d'encliquetage entre le moyen de sélection (9) et le côté inférieur, contenant les ouvertures de chambre (5, 6, 7), d'un récipient (15) présentant les chambres (2, 3, 4) ou entre le moyen de sélection (9) et le moyen de fermeture (12).

13. Machine automatique selon la revendication 12,
**caractérisée en ce que**
le système d'encliquetage présente un cran ressort-bille ou une languette (21) déformable de façon élastique avec un contour de came ou de crochet (22), constitué de façon adjacente, qui ne peut être engagé(e) que dans des positions définies du moyen de sélection (9) dans un creux (23) correspondant.

14. Machine automatique selon l'une des revendications précédentes,
**caractérisée en ce que**,
pour la mise en oeuvre d'une détection de position du moyen de sélection (9) et/ou du moyen de fermeture (12) des générateurs de signaux (24) sont prévus sur la circonférence extérieure du moyen de sélection (9) et/ou du moyen de fermeture (12) qui peuvent être définis au moyen d'un système de détection (25).

15. Machine automatique selon la revendication 14,
**caractérisée en ce que**
le système de détection (25) est un système de balayage mécanique des générateurs de signaux (24) composés des relevés ou un capteur de signaux électronique pour la détection des signaux en provenance du générateur de signaux (24).

16. Machine automatique selon l'une des revendications précédentes,
**caractérisée en ce**
**qu'**un moulin (26) est disposé entre le moyen de fermeture (12) et l'unité d'infusion (8) pour le broyage du produit végétal.

17. Machine automatique selon l'une des revendications précédentes,
**caractérisée en ce que**
les chambres (5, 6, 7) sont des éléments constitutifs d'un récipient (27) qui présente ces chambres.
